(19) Europäisches Patentamt
European Patent Office
Office européen des brevets

(11) EP 3 987 178 B1

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **20733799.9**

(22) Anmeldetag: **18.06.2020**

(51) Internationale Patentklassifikation (IPC):
**F03D 9/25** (2016.01)   **F03D 7/04** (2006.01)
**F03D 17/00** (2016.01)

(52) Gemeinsame Patentklassifikation (CPC):
**F03D 7/048; F03D 17/00;** F05B 2260/82;
F05B 2260/821; F05B 2270/8042; Y02E 10/72;
Y02P 70/50

(86) Internationale Anmeldenummer:
**PCT/EP2020/067003**

(87) Internationale Veröffentlichungsnummer:
**WO 2020/254514 (24.12.2020 Gazette 2020/52)**

(54) **VERFAHREN ZUM DURCHFÜHREN EINER ENERGIEERTRAGSPROGNOSE UND WINDPARK**

METHOD FOR CONDUCTING AN ENERGY YIELD PROGNOSIS AND WIND FARM

MÉTHODE DE RÉALISATION D'UN PRONOSTIC DE RENDEMENT ÉNERGÉTIQUE ET PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2019 DE 102019116753**

(43) Veröffentlichungstag der Anmeldung:
**27.04.2022 Patentblatt 2022/17**

(73) Patentinhaber: **Wobben Properties GmbH**
**26607 Aurich (DE)**

(72) Erfinder: **BRUEDGAM, Michael**
**26603 Aurich (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
EP-A2- 1 770 278     DE-B3- 102015 103 757
US-A1- 2010 138 201     US-A1- 2014 244 188

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Durchführen einer Energieertragsprognose und einen Windpark.

Die Bestimmung der heterogenen Anströmbedingungen an verschiedenen Standorten für Windenergieanlagen in Windparks in komplexem Gelände ist aufwendig und mit signifikanten Unsicherheiten verbunden. Hierzu müssen in einem geplanten Windpark Windmessungen durchgeführt werden, um basierend auf den meteorologischen Daten Energieertragsprognosen durchführen zu können. Die Energieertragsprognosen können beispielsweise Informationen zum jährlichen Energieertrag, auch bekannt als Annual Energy Production, AEP, des Windparks enthalten. Dies heißt, dass der jährliche Energieertrag aller Windenergieanlagen im geplanten Windpark zusammengefasst wird.

Es ist bekannt, die Windmessungen mit Windmessmasten oder bodenbasierten, senkrecht messenden Lidar-Profilern durchzuführen. Eine europäische Norm, die verbindlich zur Energieertragsmessung verwendet werden muss, existiert nicht.

Bei bisher durchgeführten Windmesskampagnen mit Windmessmasten werden die Messgeräte an repräsentativen Positionen im Windpark installiert. Die Messung erfolgt an von den Windenergieanlagenpositionen abweichenden Punkten und wird dann zum Zwecke der Ertragsprognose an die Orte der Windenergieanlagen extrapoliert. Durch die Abweichung der Position der Messung von der Windenergieanlage kommt es zu Ungenauigkeiten bei der Ertragsprognose. Außerdem ist die Montage der Windmessmasten aufwendig und kostenintensiv.

Alternativ ist bekannt, die Windbedingungen, die der Ertragsprognose zugrunde liegen, aus numerischen Windmodellen an benötigten Windenergieanlagen zu ermitteln. Aufgrund hoher Modellunsicherheiten finden derartige Simulationen derzeitig keine alleinige Anwendung und es muss immer mindestens eine Messung als Validierung vorhanden sein, die üblicherweise mittels der bekannten Windmessmasten durchgeführt wird.

Das Deutsche Patent- und Markenamt hat in der Prioritätsanmeldung zu vorliegender Anmeldung folgenden Stand der Technik recherchiert: GB 2560223 A, US 2014/0028496 A1, US 2014/0244188 A1, WO 2018/059259 A1 und DIN EN 61400-12-1: "Messung des Leistungsverhaltens von Windenergieanlagen", Windenergieanlagen Teil 12-1. Weiterer Stand der Technik ist aus DE102015103757B3 bekannt.

Vor diesem Hintergrund war es eine Aufgabe der vorliegenden Erfindung, die Unsicherheit der Ertragsprognosen von Windparks zu verringern. Eine weitere Aufgabe der vorliegenden Erfindung war es, eine alternative Möglichkeit der Bestimmung von Ertragsprognosen bereitzustellen, die insbesondere im Vergleich mit den bisher bekannten Verfahren weniger aufwendig ist.

Erfindungsgemäß wird die Aufgabe durch ein Verfahren zum Durchführen einer Energieertragsprognose in einem bestehenden oder in Planung befindlichen Windpark mit mehreren Windenergieanlagen, insbesondere in einem On-Shore-Windpark mit komplexem Gelände, gelöst. Das Verfahren umfassend die folgenden Schritte: a) Messen von wenigstens einem meteorologischen Parameter in dem Raumbereich über der Fläche des Windparks mittels wenigstens zwei Lidar-Scannern, b) Verwenden des gemessenen meteorologischen Parameters zur Energieertragsprognose des Windparks.

Durch das erfindungsgemäße Verfahren kann aufgrund von Messungen mittels der Lidar-Scanners in dem Raumbereich über der Fläche des Windparks, das heißt an den Positionen der Windenergieanlagen des Windparks, die Unsicherheit der Ertragsprognosen deutlich gesenkt werden. Keine horizontale oder vertikale Extrapolation muss durchgeführt werden, wie bei aktuell durchgeführten Messungen, zum Beispiel mit einem Windmessmast. Die Senkung der Unsicherheit der Energieertragsprognose kann demnach zu einer optimierten Finanzierung und Durchführung von Windparkprojekten führen.

Ferner führt das Messen des meteorologischen Parameters mittels des Lidar-Scanners zu einer verringerten Installationszeit, da keine Baugenehmigungen und langen Installationszeiten, wie beispielsweise für Windmessmasten bis in Nabenhöhe der Windenergieanlagen, erforderlich sind. Der Raumbereich über der Fläche des Windparks umfasst vorzugsweise die geplanten oder bereits errichteten Windenergieanlagen des Windparks sowie einen Bereich an den oder nahe der Windenergieanlagen, wobei ein Bereich an, bzw. nahe der Windenergieanlagen insbesondere einen Abstand von geringer 10 m der Windenergieanlage betrifft.

Mit dem Lidar-Scanner wird eine sogenannte radiale Windgeschwindigkeit gemessen, das heißt eine Windgeschwindigkeit in der von dem Lidar-Scanner in Messrichtung zeigenden Richtung. Aus mehreren radialen Windgeschwindigkeiten unterschiedlicher Lidar-Scanner kann dann insbesondere auf die Windrichtung geschlossen werden. Darüber hinaus kann aus mehreren Messungen vertikal die Windscherung an einer Position (x,y) oder die Winddrehung, das heißt die Kombination mehrerer Windrichtungen in vertikaler Richtung an einer Stelle, erlangt werden. So ist es vorteilhaft möglich, aus mehreren Einzelmessungen auch komplexere meteorologische Größen des Windfeldes über dem Windpark zu erhalten.

Vorzugsweise ist der Lidar-Scanner ein bodenbasierter Lidar-Scanner. Dadurch werden die mit dem Errichten verbundenen Arbeiten auf ein Minimum begrenzt. Es ist auch möglich, dass die bodenbasierten Lidar-Scanner sogar transportabel sind, das heißt vormontiert an die Einsatzstelle gebracht werden.

Besonders bevorzugt werden in dem Windpark drei Lidar-Scanner positioniert. Meteorologische Parameter, insbesondere Windbedingungen wie Windgeschwindigkeit und Windrichtung kann dann ohne Positionswechsel der Messgeräte in einer Windmesskampagne durchgeführt werden. Dies führt zu einer weiteren Zeitersparnis, da die Durchführung der Windmesskampagne zum Durchführen der Energieertragsprognose in kurzer Zeit stattfinden kann. Die drei Lidar-Scanner ermöglichen insbesondere bei gleichzeitiger Messung des gleichen Raumpunktes eine Bestimmung des dreidimensionalen Windvektors an diesem Punkt, da drei unabhängig gemessene radiale Windgeschwindigkeiten mit, durch die Messrichtung der Lidar-Scanner festgelegten, Radialrichtungen vorliegen.

Die Windrichtung kann bei einem Einsatz von lediglich zwei Lidar-Scannern, die gleichzeitig einen bestimmten Raumpunkt messen, als horizontal approximiert werden, das heißt, dass eine vertikale Komponente der Windgeschwindigkeit als vernachlässigbar angenommen wird. Dies ist insbesondere in wenig komplexem Gelände in guter Näherung möglich, so dass in diesem Fall der Aufwand durch die reduzierte Anzahl der eingesetzten Lidar-Scanner weiter verringert werden kann.

Lidar-Scanner haben die Eigenschaft, dass sie in einem bestimmten Raumbereich horizontal und vertikal bezüglich des Lidar-Scanners meteorologische Parameter, insbesondere Windgeschwindigkeit und Windrichtung, messen können. Lidar-Scanner können demnach den Punkt, bzw. den Bereich der Messung durch Einstellung des Scanners festlegen. Damit ist es möglich, ein dreidimensionales Volumen, ausgehend von einer, insbesondere bodenfixierten, Messstation zu vermessen. Im Vergleich zu festinstallierten, vertikal messenden gängigen Messmethoden, beispielsweise Windmessmast oder Lidar-Profiler, entfällt eine horizontale oder vertikale Extrapolation der erfassten Messwerte. Die erfassten Messwerte entsprechen direkt den Bedingungen an der gewünschten Position. Dadurch wird im Ergebnis eine Reduktion der Unsicherheiten der Energieertragsprognose erreicht.

Vorzugsweise erfolgt das Messen mit dem Lidar-Scanner und zusätzlich wenigstens einem weiteren Lidar-Scanner und/oder einer Referenzmessung.

Vorzugsweise wird die Referenzmessung mit einem Referenzmessmast und/oder einem senkrecht messenden Lidar-Profilern durchgeführt.

Die Referenzmessung kann, muss aber nicht notwendigerweise für die Energieertragsprognose zum Einsatz kommen. Insbesondere kann in dem Fall, dass Lidar-Profiler als Referenzmessung verwendet werden, die ebenfalls radiale Windgeschwindigkeitsmessungen durchführen, die Referenzmessung durchaus ergänzend herangezogen werden. Üblicherweise liegt der Vorteil der Referenzmessung darin, dass sie als Vergleichswert für Raumpunkte herangezogen werden kann, um die Messung per Lidar-Scanner mit konventionellen Messungen, beispielsweise durch Anemometer, vergleichbar zu machen.

Vorzugsweise umfasst die Energieertragsprognose wenigstens eine Information zum jährlichen Energieertrag des Windparks.

Das Verfahren umfasst ferner einen Schritt des c) Bereitstellens von Informationen zu wenigstens einer Orografie und/oder einer Anordnung der Windenergieanlagen, und des d) Festlegen zu vermessender dreidimensionaler Raumpunkte auf Grundlage der bereitgestellten Informationen, wobei der Schritt des Messens ein Messen für sämtliche der festgelegten Raumpunkte umfasst.

Es wird demnach ein Mapping zwischen Windparklayout und zu vermessenden, dreidimensionalen Raumpunkten, durchgeführt. Das Windparklayout kann beispielsweise Windenergieanlagenpositionen im Windpark umfassen, oder auch geometrische Geländegegebenheiten, das heißt die Orografie, berücksichtigen. Hiernach wird es möglich, dass die zu vermessenden, dreidimensionalen Raumpunkte den potenziell möglichen Positionen für Windenergieanlagen entsprechen oder aber auch alternativ oder zusätzlich eine hohe räumliche Abdeckung für potenzielle Windenergieanlagenstandorte gewährleisten. Potenziell mögliche Positionen für Windenergieanlagen sind beispielsweise dadurch gegeben, dass keine Steilhänge an der Position vorliegen, aber auch keine Naturschutzgebiete, etc. einem Standort der Windenergieanlage entgegenstehen.

Das Festlegen der zu vermessenden dreidimensionalen Raumpunkte umfasst ein Generieren eines Gitters.

Wenigstens zwei Abstände von Gitterpunkten des Gitters sind in horizontaler und/oder vertikaler Richtung unterschiedlich. Anders ausgedrückt sind die Abstände dann in horizontaler und/oder in vertikaler Richtung nicht äquidistant.

Die Abstände von Gitterpunkten sind auf Grundlage einer Windfeldsimulation festgelegt, wobei die Windfeldsimulation eine Variation der Luftschichtendicke auf Grundlage der Orografie des Windparks umfasst.

Es ist demnach die besondere Erkenntnis der vorliegenden Erfindung, dass die Kombination aus Windfeldsimulationen und darauf basierenden Messungen per Lidar-Scannern eine besonders zuverlässige Prognose, insbesondere des jährlichen Energieertrags eines Windparks ermöglichen. So ermöglicht die Windfeldsimulation eine Aussage darüber, wo zu vermessende Raumpunkte besonders nah beisammen bzw. weit voneinander beabstandet sein müssen, um die Genauigkeit der Energieertragsprognose zu gewährleisten. Hierbei spielt insbesondere die Variation der Luftschichtendicke aufgrund der Orografie, die wiederum einen direkten Einfluss auf die Abstände von Gitterpunkten und damit den Abständen zwischen zu vermessenden Raumpunkten ausübt, eine bedeutende Rolle.

Vorzugsweise beschreiben die zu vermessenden dreidimensionalen Raumpunkte eine Mindestauflösung in einem räumlichen Gebiet, das potenziell mögliche

Windenergieanlagenstandorte des Windparks beschreibt.

Vorzugsweise haben die zu vermessenden dreidimensionalen Raumpunkte übereinstimmende Höhen über der Orografie. Die Höhe entspricht demnach einer Messhöhe oder einem Abstand vom Boden am Standort. Beispielsweise kann die Höhe entsprechend einer tatsächlichen oder geplanten Nabenhöhe einer Windenergieanlage gewählt werden. Alternativ können auch unterschiedliche Messhöhen für unterschiedliche Positionen, beispielsweise angepasst an unterschiedliche Nabenhöhen bzw. Windenergieanlagen-Typen, gewählt werden. Beispielsweise kann die Messhöhe auch von einer Luftschichtendicke an der bestimmten Position über der Orografie abhängen.

Vorzugsweise werden je zu vermessendem dreidimensionalen Raumpunkt durch an verschiedenen Positionen angeordnete Scanner wenigstens zwei radiale Windgeschwindigkeiten gemessen. Durch die Messung von mindestens zwei unterschiedlichen Lidar-Scannern an einem Raumpunkt werden zwei unabhängige radiale Windgeschwindigkeiten erhalten, wobei durch die Kombination der beiden radialen Windgeschwindigkeiten eine horizontale Windrichtung bestimmbar ist. Demnach führen die beiden radialen Windgeschwindigkeiten unter der Annahme, dass das Windfeld horizontal ist also die vertikale Windkomponente vernachlässigbar ist, zu dem horizontalen Windvektor. Indem vorteilhafter Weise ein dritten Laser-Scanner insbesondere gleichzeitig den selben Raumpunkt vermisst, kann der volle dreidimensionale Windvektor mit der absoluten Windgeschwindigkeit sowie der horizontalen und vertikalen Windrichtung erhalten werden.

Vorzugsweise werden aus den gemessenen Windgeschwindigkeiten und Windrichtungen mittels Superposition kartesische Windvektoren und/oder Windrichtungen ermittelt.

Vorzugsweise wird auf Grundlage von zeitlich gemittelten Werten der kartesischen Windvektoren und/oder Windrichtungen eine Häufigkeitsverteilung erstellt, wobei insbesondere eine Wiedergabe einer Weibullverteilung an die erstellte Häufigkeitsverteilung angepasst wird.

Die Weibullverteilung hat sich besonders bei der Betrachtung von Wind als geeignet erwiesen. Selbstverständlich sind auch andere, geeignete Verteilungen anwendbar.

Vorzugsweise wird ein jährlicher Energieertrag einer Windenergieanlage basierend auf der Häufigkeitsverteilung an einem der dreidimensionalen Raumpunkte ermittelt.

Vorzugsweise wird basierend auf den Häufigkeitsverteilungen mehrerer der dreidimensionalen Raumpunkte ein jährlicher Energieertrag des Windparks bestimmt.

Vorzugsweise entsprechen die dreidimensionalen Raumpunkte potentiellen Positionen von Windenergieanlagen. Basierend auf den Häufigkeitsverteilungen mehrerer der dreidimensionalen Raumpunkte wird eine Position der Windenergieanlagen des Windparks derart bestimmt, dass der jährliche Energieertrag des Windparks maximiert ist, wobei der jährliche Energieertrag des Windparks insbesondere unter Berücksichtigung gegenseitiger Beeinflussungen der Windenergieanlagen optimiert wird. Die gegenseitigen Beeinflussungen sind insbesondere Nachlaufeffekte, die durch die räumliche Nähe von Windenergieanlagen in Windparks entstehen.

Vorzugsweise wird eine Position des wenigstens einen, insbesondere der wenigstens zwei, Lidar-Scanner basierend auf den zu vermessenden dreidimensionalen Raumpunkten festgelegt, insbesondere derart, dass unter Berücksichtigung der Orografie eine direkte Sichtverbindung zwischen dem Lidar-Scanner und dem zu vermessenden dreidimensionalen Raumpunkt besteht.

Erfindungsgemäß wird die Aufgabe ferner durch einen Windpark, insbesondere On-Shore-Windpark mit komplexem Gelände, gelöst, umfassend wenigstens zwei Lidar-Scanner, wobei die Lidar-Scanner eine direkte Sichtverbindung zu mehreren zu vermessenden dreidimensionalen Raumpunkten, die potentiellen Positionen von Windenergieanlagen entsprechen, haben, wobei die zu vermessenden, dreidimensionalen Raumpunkte über der Fläche des Windparks auf Grundlage der Orografie und/oder einer Anordnung von Windenergieanlagen des Windparks festgelegt ist, wobei die Lidar-Scanner dazu eingerichtet sind, einen meteorologischen Parameter an mehreren der zu vermessenden, dreidimensionalen Raumpunkte zu bestimmen und den bestimmten, meteorologischen Parameter zur Energieertragsprognose des Windparks zu verwenden.

Vorzugsweise ist die Position der wenigstens zwe und bevorzugt der drei Lidar-Scanner, auf Grundlage der Orografie derart gewählt, dass eine direkte Sichtverbindung zwischen jedem der Lidar-Scanner und den gewünschten Raumpunkten besteht. Besonders bevorzugt werden, sofern es die Orografie zulässt, mehrere der Lidar-Scanner, vorzugsweise drei Lidar-Scanner, in möglichst gleichseitig dreieckiger Positionierung zueinander in einer im Wesentlichen horizontalen Ebene angeordnet.

Erfindungsgemäß wird die Aufgabe ferner durch eine Verwendung eines Lidar-Scanners zur Energieertragsprognose eines Windparks gelöst.

Weitere Vorteile und Ausgestaltungen werden nachfolgend mit Verweis auf die beigefügten Figuren beschrieben. Hierbei zeigen:

Fig. 1    schematisch und exemplarisch eine Windenergieanlage;

Fig. 2    schematisch und exemplarisch einen Windpark;

Fig. 3    schematisch und exemplarisch ein Ablaufdiagramm eines erfindungsgemäßen Verfahrens; und

Fig. 4     schematisch und exemplarisch eine Anordnung von Lidar-Scannern.

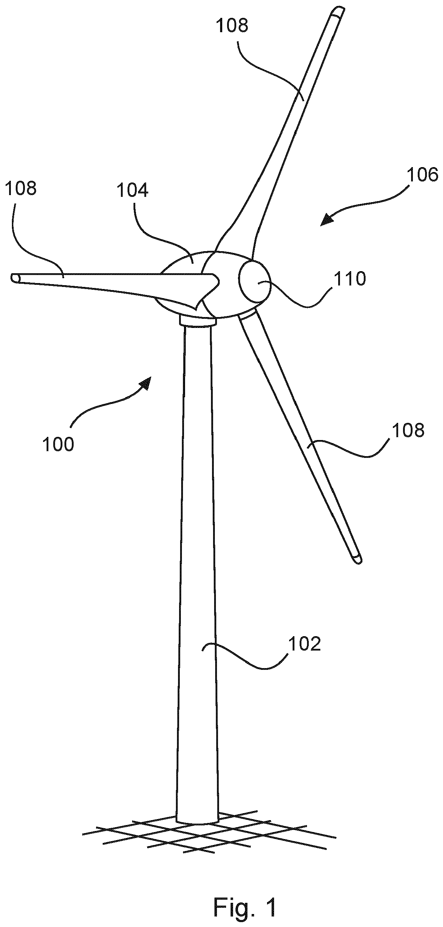

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

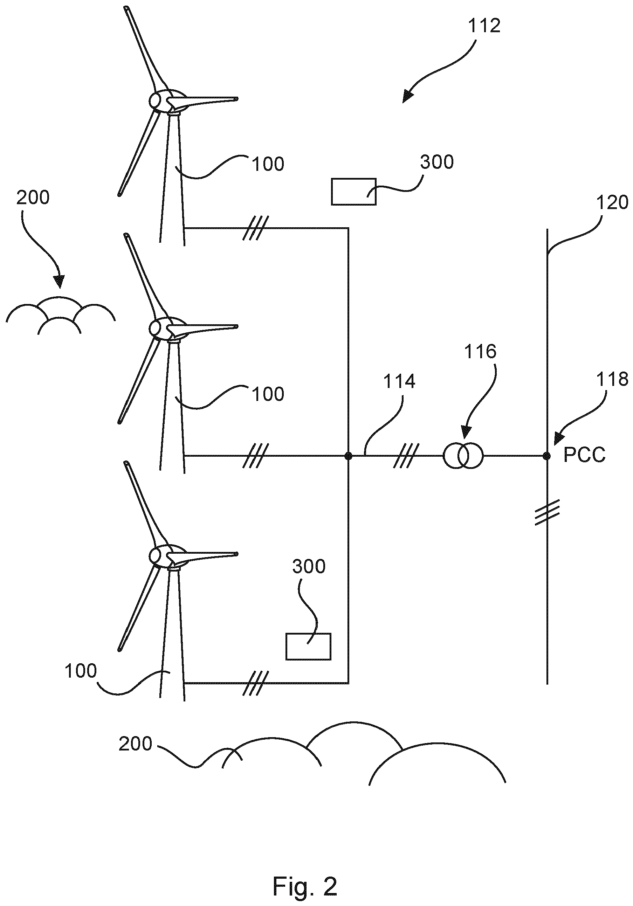

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Bei dem Windpark 112, der in Fig. 2 gezeigt ist, handelt es sich um einen sogenannten On-Shore-Windpark, das heißt ein solcher, der über dem Land errichtet ist. Aus diesem Grund ist schematisch und exemplarisch eine Orografie 200, das heißt im Wesentlichen der Verlauf der natürlichen Erdoberfläche gezeigt. Orografie umfasst insbesondere Verlauf, Anordnung, etc. von Hügeln, Gebirgen oder auch Gewässern. Die Orografie 200 ist ein wichtiger Einflussfaktor, der Windparks an Land von sogenannten Off-Shore-Windparks unterscheidet, die den Einflüssen der Orografie nicht unterliegen. Insbesondere können die Windbedingungen an unterschiedlichen Position des Windparks 112 aufgrund der Orografie 200 signifikant voneinander abweichen. Die der Erfindung zugrundeliegende Aufgabe, eine Bestimmung des Energieertrages in dem Windpark 112 vorzunehmen, ist demnach bei On-Shore-Windparks 112 wesentlich komplexer, als dies beispielsweise für Off-Shore-Windparks der Fall wäre. Durch die beispielhaft gezeigten Hügel unterscheiden sich meteorologische Parameter, das heißt insbesondere Windgeschwindigkeit und/oder Windrichtung zwischen den exemplarisch gezeigten drei Windenergieanlagen 100 des Windparks 112.

Zum Zwecke der Energieertragsprognose in dem Windpark 112 sind beispielhaft zwei Lidar-Scanner 300 gezeigt, die in dem Windpark 112 angeordnet sind. Die Lidar-Scanner 300 sind nur beispielhaft in einem Windpark 112 gezeigt, es kann sich auch um ein freies Gelände handeln, auf dem beispielsweise ein Windpark geplant ist, dass dann unter Verwendung der Lidar-Scanner 300 vermessen wird.

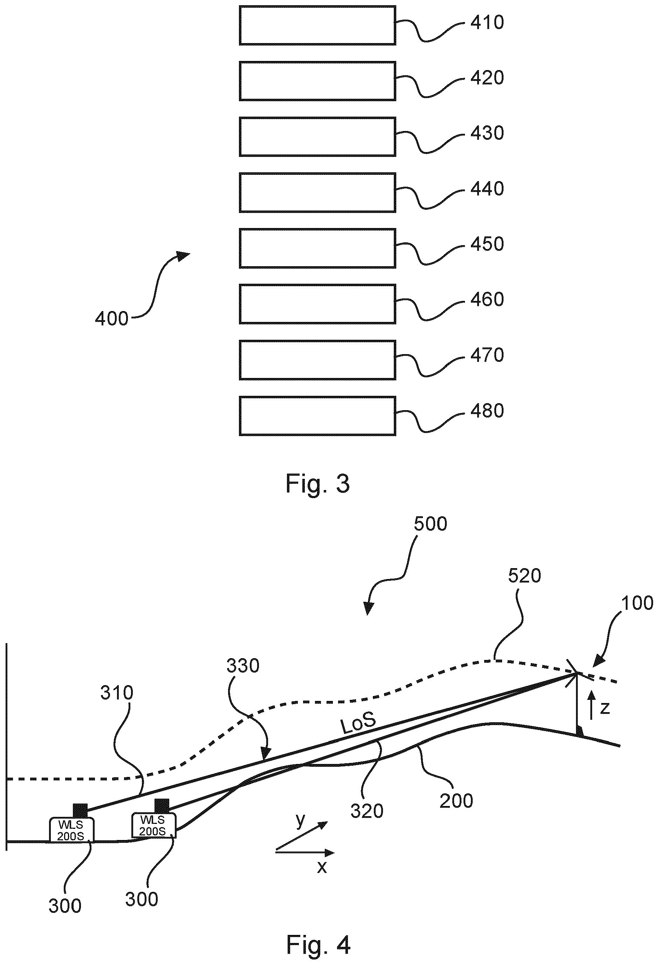

Besonders bevorzugt wird gemäß der vorliegenden Erfindung die Anordnung von wenigstens drei Lidar-Scannern 300, wobei ebenso die Anordnung von zwei Lidar-Scannern 300 zur erfindungsgemäßen Energieertragsprognose ausreichen. Fig. 3 zeigt schematisch und exemplarisch ein Flussdiagramm des erfindungsgemäßen Verfahrens 400 zum Durchführen einer Energieertragsprognose in einem Windpark, beispielsweise dem Windpark 112. In einem Schritt 410 werden Informationen zu wenigstens einer Orografie 200 und/oder einer Anordnung der Windenergieanlagen 100 des Windparks 112 bereitgestellt. Alternativ oder zusätzlich können auch Simulationsergebnisse beispielsweise zu den Windbedingungen oder ähnliche Informationen bereitgestellt werden.

In einem Schritt 420 wird ein Mapping durchgeführt, das heißt, die zu vermessenden dreidimensionalen Raumpunkte (x,y,z) werden auf Grundlage der in Schritt 410 bereitgestellten Informationen festgelegt. Die Bestimmung dieses Mappings kann beispielsweise durch das Windparklayout, das heißt die Positionen der Windenergieanlagen 100 in dem Windpark 112 gegeben sein, oder durch geometrische Geländegegebenheiten, das heißt durch die Orografie 200 bestimmt sein. Hierdurch wird gewährleistet, dass an potenziell möglichen Windenergieanlagenpositionen gemessen wird und/oder eine hohe räumliche Abdeckung für potenzielle Windenergieanlagenstandorte gewährleistet wird. Potenziell mögliche Positionen für Windenergieanlagen 100 sind beispielsweise derart, dass keine Steilhänge, Naturschutzgebiete oder Ähnliches an den jeweiligen Positionen anzufinden sind. Bei diesem Mapping in Schritt 420 können Algorithmen zur Gittergenerierung zum Einsatz kommen. Diese können beispielsweise angelehnt an die Erzeugung von Gittern zur Berechnung von Fluidsimulationen, oder auch andere geeignete Algorithmen zur Gittergenerierung sein. Die Abstände des Gitters zwischen benachbarten Punkten des Gitters können sowohl in horizontaler als auch in vertikaler Richtung, das heißt in x-, y-, und auch in z-Richtung, nicht äquidistant sein. Dies kann abhängig von vorherbestimmten Windfeldsimulationen oder von anderen Parametern sein, die eine Variation einer Luftschichtendicke in Abhängigkeit von der Höhe über Normalnull, aufgrund der Orografie 200 aufzeigen kann. Wenn sich die Luftschichtendicke über der Orografie 200 nicht ändert, können die vertikalen Messhöhen z, das heißt der Abstand vom Boden an einem horizontalen Standort x, y, bis zu einer lotrecht dazu definierten Höhe an allen zu vermessenden dreidimensionalen Raumpunkten übereinstimmen. Beispielsweise kann die Höhe einer Nabenhöhe der Windenergieanlagen 100, egal ob geplant oder bereits installiert, entsprechen.

In einem Schritt 430 werden die Lidar-Scanner 300, vorzugsweise mindestens zwei Lidar-Scanner 300, möglichst in einer gleichseitigen dreieckigen Positionierung zueinander in horizontaler Ebene im Windpark verteilt platziert. Dies setzt voraus, dass die Orografie 200 eine derartige Positionierung zulässt. Wichtig in diesem Schritt ist, dass die Platzierung derart erfolgt, dass eine direkte Sichtlinie zwischen den Lidar-Scannern 300 und dem jeweiligen zu vermessenden dreidimensionalen Raumpunkt besteht, wie mit Verweis auf Fig.4 schematisch illustriert wird.

Fig. 4 zeigt schematisch und exemplarisch einen Querschnitt 500 eines Windparks 112, wobei exemplarisch eine mögliche oder gedachte Windenergieanlage 100 gezeigt ist, die bezogen auf die Position der Lidar-Scanner 300 erhöht angeordnet ist. Natürlich kann auch anstelle der möglichen oder gedachten Windenergieanlage 100 an der schematisch gezeigten Position bereits eine tatsächliche Windenergieanlage errichtet sein.

Ist der Lidar-Scanner 300 zu nah an dem Hügel angeordnet, würde die theoretische Sichtlinie 320 an einer Position 330 durch das Gelände verlaufen, sodass diese Position unmöglich ist, um einen direkten Sichtkontakt mit einer zu vermessenden Position im Bereich der Windenergieanlage 100 ist. Wird hingegen die Position des Lidar-Scanners 300 derart nach beispielsweise links verschoben, dass eine Sichtlinie 310 durchgehend bis zu der Windenergieanlage 100 verläuft, ist diese Position geeignet und kann für die Position der Lidar-Scanner 300 in dem tatsächlichen Windpark zum Einsatz kommen. In diesem Fall ist eine Höhe z, die den Abstand vom Boden am Standort der Windenergieanlage 100 angibt, derart gewählt, dass sie mit einer Luftschichtendicke 520 übereinstimmt. Die Luftschichtendicke 520 ist in diesem Beispiel über den gesamten Windpark konstant, die absolute Höhe variiert in Abhängigkeit der Orografie 200.

In einem Schritt 440 wird dann für jeden der zu vermessenden dreidimensionalen Raumpunkte eine Messung mittels der platzierten Lidar-Scanner 300 durchgeführt. Hierzu werden die Lidar-Scanner derart ausgerichtet, dass die Messung gleichzeitig an dem gewünschten Raumpunkt durchgeführt werden kann. Die jeweilige Messung ergibt insbesondere eine radiale Windgeschwindigkeit und eine radiale Windrichtung an jedem der zu vermessenden Raumpunkte. Die Gleichzeitigkeit ist hier vorteilhaft, um auf die Windgeschwindigkeit und Windrichtung beispielsweise in kartesischen Koordinaten zu kommen. Bei Nichtgleichzeitigkeit muss eine gewisse Konstanz im Windfeld vorausgesetzt werden, damit über Superposition die Windgeschwindigkeit beispielsweise in kartesischen Koordinaten bestimmt werden kann.

In einem Schritt 450 werden dann die in Schritt 440 gemessenen radialen Windgeschwindigkeiten und Windrichtungen jedes einzelnen Raumpunktes in einen resultierenden kartesischer Windvektor $v$, bzw. eine Windrichtung $\varphi$ umgerechnet. Die Dadurch ermittelten Zeitreihen in verschiedenen Höhen werden zeitlich, insbesondere über die in dem Bereich der Windenergietechnik weit verbreiteten 10 Minuten, gemittelt, sodass sogenannte Mittelwerte $v_{bin}$ und $\varphi_{bin}$ entstehen.

Vorzugsweise wird die gemessene, gemittelte Zeitreihe zusätzlich gegenüber Langzeitdaten wie mesoskaligen Simulationsdaten von MERRA, ERA5, etc., die einen Zeitraum von insbesondere mindestens 10 Jahren, vorzugsweise 30 Jahren von der Gegenwart in die Vergangenheit abdecken, verglichen und gegebenenfalls korrigiert, d.h. die gemessene Zeitreihe wird den Langzeitdaten angeglichen. Vorzugsweise wird die Zeitreihe zusätzlich vertikal und/oder horizontal extrapoliert, nämlich in dem Fall, in dem nicht am zukünftigen Standort der Windenergieanlage gemessen wurde.

In einem Schritt 460 wird aus den in Schritt 450 erzeugten, ermittelten Werten anhand von Klassen eine Häufigkeitsverteilung, bzw. ein Histogramm erzeugt. Vorzugsweise wird diese Häufigkeitsverteilung mittels Variation der Parameter einer Weibull-Verteilung approximiert, sodass eine geringstmögliche Abweichung durch die Weibull-Verteilung $F(V)$ wiedergegeben werden kann. Die Weibull-Verteilung ist eine, die Windgeschwindigkeiten besonders gut approximierende Verteilung, wobei auch andere Verteilungen ansetzbar sind.

In einem Schritt 470 wird dann anhand der erzeugten Verteilung und einer spezifischen Leistungskurve der Windenergieanlage 100, die üblicherweise bekannt ist, für jede der gemittelten Windgeschwindigkeiten eine Leistung $P_i$ ($i$ = 1 ... $N$), wobei $N$ die Anzahl der unterschiedlichen Klassen ist, bestimmt werden. Die jährliche Energieproduktion wird dann wie folgt berechnet:

$$AEP = N_h \sum_{i=1}^{N} [F(V_i) - F(V_{i-1})] \left( \frac{P_{i-1} + P_i}{2} \right)$$

Die Formel beschreibt eine Summe über jede der innerhalb eines Jahres durchlaufenen Stunden $N_h$, die 8760 entspricht. Die dargestellte Formel ist aus der IEC-Norm 61400-12-1 entlehnt, auch ähnliche, vergleichbare Formeln zur Berechnung der Jahresenergieproduktion sind ebenso anwendbar. Alternativ kann sich die jährliche Energieproduktion in diesem Schritt auch direkt aus der Zeitreihe bestimmen lassen, wenn für jede der gemittelten Windgeschwindigkeiten $v_{bin}$ anhand der Leistungskurve der Windenergieanlage 100 die zugehörige Leistung $P_i$ aufsummiert wird.

$$AEP = \frac{N_{jahr}}{N_t} * T \sum_{i=1}^{N_t} P_i(v_{bin})$$

Hierbei muss dann die Anzahl der gemittelten Zeitintervalle $N_t$ im Verhältnis zur jährlichen Anzahl $N_{Jahr}$ berücksichtigt werden. $T$ ist die zeitliche Länge der Mittelung, meist 10 Minuten.

Zusätzlich wird vorteilhafter Weise der Effekt von sich gegenseitig beeinflussenden Windenergieanlagen 100 im Park, beispielsweise Nachlaufeffekten und Ähnlichem, sowie eine Korrektur der Leistungskurve aufgrund von Dichteveränderungen in hohen Höhen (Gebirge) berücksichtigt. Hierdurch wird eine noch präzisere Berechnung der jährlichen Energieproduktion des Windparks 112 möglich.

Die Bestimmung des Jahresenergieertrages des Windparks wird mit einem Schritt 480 in Fig. 3 schematisch beschrieben. Dieser Schritt kann ebenfalls ein Optimieren der Positionen der Windenergieanlagen 100 innerhalb des Windparks 112 umfassen. Bei dem Optimieren wird vorzugsweise die Maximierung des Jahresenergieertrages angestrebt, wobei ebenso andere Optimierungskriterien, beispielsweise eine Lastminimierung der Beteiligten Windenergieanlagen 100, angestrebt werden können. Hierbei ist natürlich zu berücksichtigen, dass, wenn Positionen von Windenergieanlagen 100 verschoben werden, um eine Optimierung zu erreichen, die Messwerte nicht mehr mit den neuen Positionen der Windenergieanlagen 100 übereinstimmen, so dass vorzugsweise eine horizontale und vertikale Extrapolation für die Unsicherheitsbestimmung erfolgt.

**Patentansprüche**

1. Verfahren (400) zum Durchführen einer Energieertragsprognose in einem bestehenden oder in Planung befindlichen Windpark (112) mit mehreren Windenergieanlagen (100), insbesondere in einem On-Shore-Windpark mit komplexem Gelände (200), umfassend die folgenden Schritte:

   - Bereitstellen (410) von Informationen zu wenigstens einer Orografie (200) und/oder einer Anordnung der Windenergieanlagen,
   - Festlegen (420) zu vermessender dreidimensionaler Raumpunkte auf Grundlage der bereitgestellten Informationen,
   - Messen (440) von wenigstens einem meteorologischen Parameter für sämtliche der festgelegten Raumpunkte in dem Raumbereich über der Fläche des Windparks (112) mittels wenigstens zwei Lidar-Scannern (300),
   - Verwenden (480) des gemessenen meteorologischen Parameters zur Energieertragsprognose des Windparks (112),

   wobei das Festlegen (420) der zu vermessenden dreidimensionalen Raumpunkte ein Generieren eines Gitters umfasst, wobei wenigstens zwei Abstände von Gitterpunkten des Gitters in horizontaler und/oder vertikaler Richtung unterschiedlich sind, wobei die Abstände von Gitterpunkten auf Grundlage einer Windfeldsimulation festgelegt sind, wobei die Windfeldsimulation eine Variation der Luftschichtendicke auf Grundlage der Orografie (200) des Windparks (112) umfasst.

2. Verfahren (400) nach Anspruch 1, wobei der Lidar-Scanner (300) ein bodenbasierter Lidar-Scanner (300) ist, wobei eine Messposition des Lidar-Scanners (300) insbesondere in Abhängigkeit der Orographie (200) und dem Raumbereich erhöht bzw. angepasst ist.

3. Verfahren (400) nach einem der vorstehenden Ansprüche, wobei das Messen mit dem Lidar-Scanner (300) und zusätzlich wenigstens einem weiteren Lidar-Scanner (300) und/oder einer Referenzmessung erfolgt.

4. Verfahren (400) nach Anspruch 3, wobei die Referenzmessung mit einem Referenzmessmast und/oder einem senkrecht messenden Lidar-Profilern durchgeführt wird.

5. Verfahren (400) nach einem der vorstehenden Ansprüche, wobei die Energieertragsprognose wenigstens eine Information zum jährlichen Energieertrag des Windparks (112) umfasst.

6. Verfahren (400) nach einem der vorstehenden Ansprüche, wobei die zu vermessenden dreidimensionalen Raumpunkte (x,y,z) eine Mindestauflösung in einem räumlichen Gebiet, das potentiell mögliche Windenergieanlagenstandorte des Windparks (112) beschreibt, beschreiben.

7. Verfahren (400) nach einem der vorstehenden Ansprüche, wobei die zu vermessenden dreidimensionalen Raumpunkte (x,y,z) übereinstimmende Höhen (z) über der Orografie (200) haben.

8. Verfahren (400) nach einem der vorstehenden Ansprüche, wobei je zu vermessendem dreidimensionalem Raumpunkt (x,y,z) durch an verschiedenen Positionen angeordnete Lidar-Scanner (300) wenigstens zwei radiale Windgeschwindigkeiten gemessen werden.

9. Verfahren (400) nach Anspruch 8, wobei aus den gemessenen radialen Windgeschwindigkeiten mittels Superposition kartesische Windvektoren und/oder Windrichtungen ermittelt werden.

10. Verfahren (400) nach Anspruch 9, wobei auf Grundlage von zeitlich gemittelten Werten der kartesischen Windvektoren und/oder Windrichtungen eine Häufigkeitsverteilung erstellt wird, wobei insbesondere eine Wiedergabe einer Weibullverteilung an die erstellte Häufigkeitsverteilung angepasst wird.

11. Verfahren (400) nach Anspruch 10, wobei ein jährlicher Energieertrag einer Windenergieanlage (100) basierend auf der Häufigkeitsverteilung an einem der dreidimensionalen Raumpunkte ermittelt wird.

12. Verfahren (400) nach Anspruch 11, wobei basierend auf den Häufigkeitsverteilungen mehrerer der dreidimensionalen Raumpunkte ein jährlicher Energieertrag des Windparks (112) bestimmt wird.

13. Verfahren (400) nach Anspruch 11 oder 12, wobei die dreidimensionalen Raumpunkte potentiellen Positionen von Windenergieanlagen (100) entsprechen und wobei basierend auf den Häufigkeitsverteilungen mehrerer der dreidimensionalen Raumpunkte eine Position der Windenergieanlagen (100) des Windparks (112) derart bestimmt wird, dass der jährliche Energieertrag des Windparks (112) maximiert ist, wobei der jährliche Energieertrag des Windparks insbesondere unter Berücksichtigung gegenseitiger Beeinflussungen der Windenergieanlagen (100) optimiert wird.

14. Verfahren (400) nach einem der vorstehenden Ansprüche, wobei eine Position des wenigstens einen, insbesondere der wenigstens zwei, Lidar-Scanner (300) basierend auf den zu vermessenden dreidimensionalen Raumpunkten (x,y,z) festgelegt wird, insbesondere derart, dass unter Berücksichtigung der Orografie (200) eine direkte Sichtverbindung (510) zwischen dem Lidar-Scanner (300) und dem zu vermessenden dreidimensionalen Raumpunkt (x,y,z) besteht.

15. Windpark (112), insbesondere On-Shore-Windpark mit komplexem Gelände, umfassend wenigstens zwei Lidar-Scanner (300), wobei die Lidar-Scanner (300) eine direkte Sichtverbindung (310) zu mehreren zu vermessenden dreidimensionalen Raumpunkten (x,y,z), die potentiellen Positionen von Windenergieanlagen (100) entsprechen, haben,

wobei die zu vermessenden, dreidimensionalen Raumpunkte (x,y,z) über der Fläche des Windparks (112) auf Grundlage der Orografie (200) und/oder einer Anordnung von Windenergieanlagen (100) des Windparks (112) festgelegt ist, wobei die Lidar-Scanner (300) dazu eingerichtet sind, einen meteorologischen Parameter an mehreren der zu vermessenden, dreidimensionalen Raumpunkte (x,y,z) zu bestimmen und den bestimmten, meteorologischen Parameter zur Energieertragsprognose des Windparks (112) nach einem Verfahren gemäß einem der vorstehenden Ansprüche zu verwenden.

**Claims**

1. A method (400) for carrying out an energy yield forecast in an existing or planned wind farm (112) with a plurality of wind turbines (100), in particular in an on-shore wind farm with complex terrain (200), comprising the following steps:

   - Providing (410) information on at least one of an orography (200) and an arrangement of the wind turbines,
   - Defining (420) three-dimensional spatial points to be measured on the basis of the information provided,
   - Measuring (440) at least one meteorological parameter for all of the defined spatial points in the spatial area over the area of the wind farm (112) by means of at least two Lidar scanners (300),
   - Using (480) the measured meteorological parameter for the energy yield forecast of the wind farm (112),

   wherein defining (420) the three-dimensional spatial points to be measured comprises generating a grid,
   wherein at least two distances between grid points of the grid are different in the horizontal and/or vertical direction,
   wherein the spacing of grid points is determined on the basis of a wind field simulation, the wind field simulation comprising a variation of the air layer thickness on the basis of the orography (200) of the wind farm (112).

2. The method (400) according to claim 1, wherein the Lidar scanner (300) is a ground-based Lidar scanner (300), wherein a measurement position of the Lidar scanner (300) is increased or adapted in particular as a function of the orography (200) and the spatial area.

3. The method (400) according to one of the preceding claims, wherein the measuring is carried out with the Lidar scanner (300) and additionally at least one further Lidar scanner (300) and/or a reference measurement.

**4.** The method (400) according to claim 3, wherein the reference measurement is carried out with a reference measuring mast and/or a vertically measuring Lidar profiler.

**5.** The method (400) according to one of the preceding claims, wherein the energy yield forecast comprises at least one piece of information on the annual energy yield of the wind farm (112).

**6.** The method (400) according to any one of the preceding claims, wherein the three-dimensional spatial points (x, y, z) to be measured describe a minimum resolution in a spatial area that describes potential wind turbine locations of the wind farm (112).

**7.** The method (400) according to any one of the preceding claims, wherein the three-dimensional spatial points (x, y, z) to be measured have matching heights (z) above the orography (200).

**8.** The method (400) according to one of the preceding claims, wherein, for each three-dimensional spatial point (x, y, z) to be measured, at least two radial wind speeds are measured by Lidar scanners (300) arranged at different positions.

**9.** The method (400) according to claim 8, wherein Cartesian wind vectors and/or wind directions are derived from the measured radial wind velocities by means of superposition.

**10.** The method (400) according to claim 9, wherein a frequency distribution is generated on the basis of time-averaged values of the Cartesian wind vectors and/or wind directions, wherein in particular a reproduction of a Weibull distribution is adapted to the generated frequency distribution.

**11.** The method (400) according to claim 10, wherein an annual energy yield of a wind turbine (100) is determined based on the frequency distribution at one of the three-dimensional spatial points.

**12.** The method (400) according to claim 11, wherein, based on the frequency distributions of a plurality of the three-dimensional spatial points, an annual energy yield of the wind farm (112) is determined.

**13.** The method (400) according to claim 11 or 12, wherein the three-dimensional spatial points correspond to potential positions of wind turbines (100) and wherein, based on the frequency distributions of a plurality of the three-dimensional spatial points, a position of the wind turbines (100) of the wind farm (112) is determined such that the annual energy yield of the wind farm (112) is maximized, wherein the annual energy yield of the wind farm is optimized in particular taking into account mutual influences of the wind turbines (100).

**14.** The method (400) according to one of the preceding claims, wherein a position of the at least one, in particular of the at least two, Lidar scanners (300) is determined based on the three-dimensional spatial points (x, y, z) to be measured, in particular in such a way that, taking into account the orography (200), a direct line of sight (510) exist between the Lidar scanner (300) and the three-dimensional spatial point (x, y, z) to be measured.

**15.** A wind farm (112), in particular an onshore wind farm with complex terrain, comprising

at least two Lidar scanners (300), the Lidar scanners (300) having a direct line of sight (310) to a plurality of three-dimensional spatial points (x, y, z) to be measured, which correspond to potential positions of wind turbines (100), wherein the three-dimensional spatial points (x, y, z) to be measured are determined over the area of the wind farm (112) on the basis of the orography (200) and/or an arrangement of wind turbines (100) of the wind farm (112), wherein the Lidar scanners (300) are configured to determine a meteorological parameter at several of the three-dimensional spatial points (x, y, z) to be measured and to use the determined meteorological parameter for energy yield forecast of the wind farm (112) according to a method according to one of the preceding claims.

**Revendications**

**1.** Procédé (400) pour la mise en œuvre d'une prévision de rendement énergétique dans un parc éolien (112) existant ou en projet avec plusieurs éoliennes (100), en particulier dans un parc éolien à terre avec un terrain complexe (200), comprenant les étapes suivantes :

- la fourniture (410) d'informations à au moins une orographie (200) et/ou un ensemble des éoliennes,
- l'établissement (420) de points spatiaux tridimensionnels à mesurer sur la base des informations fournies,
- la mesure (440) d'au moins un paramètre météorologique pour l'ensemble des points spatiaux établis dans la zone spatiale sur toute la surface du parc éolien (112) au moyen d'au moins deux scanners Lidar (300),
- l'utilisation (480) du paramètre météorologique mesuré pour la prévision de rendement énergétique du parc éolien (112),

dans lequel l'établissement (420) des points spatiaux tridimensionnels à mesurer comprend une génération d'une grille,

dans lequel au moins deux écarts de points de grille de la grille sont différents dans la direction horizontale et/ou verticale,

dans lequel les écarts de points de grille sont établis sur la base d'une simulation de champ de vent, dans lequel la simulation de champ de vent comprend une variation de l'épaisseur de couche d'air sur la base de l'orographie (200) du parc éolien (112).

2. Procédé (400) selon la revendication 1, dans lequel le scanner Lidar (300) est un scanner Lidar (300) basé au sol, dans lequel une position de mesure du scanner Lidar (300) est augmentée ou adaptée en particulier en fonction de l'orographie (200) et de la zone spatiale.

3. Procédé (400) selon l'une quelconque des revendications précédentes, dans lequel la mesure s'effectue avec le scanner Lidar (300) et en plus au moins un autre scanner Lidar (300) et/ou une mesure de référence.

4. Procédé (400) selon la revendication 3, dans lequel la mesure de référence est mise en œuvre avec un mât de mesure de référence et/ou un profileur Lidar à mesure verticale.

5. Procédé (400) selon l'une quelconque des revendications précédentes, dans lequel la prévision de rendement énergétique comprend au moins une information sur le rendement énergétique annuel du parc éolien (112).

6. Procédé (400) selon l'une quelconque des revendications précédentes, dans lequel les points spatiaux tridimensionnels (x, y, z) à mesurer décrivent une résolution minimale dans une région spatiale qui décrit des sites d'éolienne potentiellement possibles du parc éolien (112).

7. Procédé (400) selon l'une quelconque des revendications précédentes, dans lequel les points spatiaux tridimensionnels (x, y, z) à mesurer présentent des hauteurs (z) concordantes sur toute l'étendue de l'orographie (200).

8. Procédé (400) selon l'une quelconque des revendications précédentes, dans lequel au moins deux vitesses de vent radiales sont mesurées par des scanners Lidar (300) disposés en différentes positions pour chaque point tridimensionnel (x, y, z) à mesurer.

9. Procédé (400) selon la revendication 8, dans lequel des vecteurs de vent cartésiens et/ou directions de vent sont déterminés à partir des vitesses de vent radiales mesurées au moyen d'une superposition.

10. Procédé (400) selon la revendication 9, dans lequel une distribution de fréquences est élaborée sur la base de valeurs moyennes dans le temps des vecteurs de vent cartésiens et/ou directions de vent, dans lequel en particulier une reproduction d'une distribution de Weibull est adaptée à la distribution de fréquences élaborée.

11. Procédé (400) selon la revendication 10, dans lequel un rendement énergétique annuel d'une éolienne (100) est déterminé sur la base de la distribution de fréquences sur un des points spatiaux tridimensionnels.

12. Procédé (400) selon la revendication 11, dans lequel un rendement énergétique annuel du parc éolien (112) est défini sur la base des distributions de fréquences de plusieurs des points spatiaux tridimensionnels.

13. Procédé (400) selon la revendication 11 ou 12, dans lequel les points spatiaux tridimensionnels correspondent à des positions potentielles d'éoliennes (100) et dans lequel une position des éoliennes (100) du parc éolien (112) est définie sur la base des distributions de fréquences de plusieurs des points spatiaux tridimensionnels, de telle sorte que le rendement énergétique annuel du parc éolien (112) est maximisé, dans lequel le rendement énergétique annuel du parc éolien est optimisé en particulier avec prise en compte des influences mutuelles des éoliennes (100).

14. Procédé (400) selon l'une quelconque des revendications précédentes, dans lequel une position de l'au moins un, en particulier des au moins deux, scanner(s) Lidar (300) est établie sur la base des points spatiaux tridimensionnels (x, y, z) à mesurer, en particulier de telle sorte qu'avec prise en compte de l'orographie (200) une liaison visuelle directe (510) est présente entre le scanner Lidar (300) et le point spatial tridimensionnel (x, y, z) à mesurer.

15. Parc éolien (112), en particulier parc éolien à terre avec un terrain complexe, comprenant au moins deux scanners Lidar (300), dans lequel les scanners Lidar (300) présentent une liaison visuelle directe (310) avec plusieurs points spatiaux tridimensionnels (x, y, z) à mesurer, qui correspondent aux positions potentielles d'éoliennes (100),

dans lequel les points spatiaux tridimensionnels (x, y, z) à mesurer sont établis sur toute la surface du parc éolien (112) sur la base de l'orographie (200) et/ou d'un ensemble d'éoliennes (100) du parc éolien (112),

dans lequel les scanners Lidar (300) sont conçus pour définir un paramètre météorologique en plusieurs des points spatiaux tridimensionnels (x, y, z) à mesurer et pour utiliser le paramètre météorologique défini pour la prévision de rendement énergétique du parc éolien (112) selon un procédé selon l'une quelconque des revendications précédentes.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2560223 A
- US 20140028496 A1
- US 20140244188 A1
- WO 2018059259 A1
- DE 102015103757 B3